# EUROPEAN PATENT SPECIFICATION

(11) **EP 2 754 926 B1**
(45) Date of publication and mention of the grant of the patent: **28.06.2017**
(21) Application number: 12830650.3
(22) Date of filing: 31.07.2012
(51) Int. Cl.: F16J 15/10, F16J 15/02, F02F 11/00, F16J 15/06

(54) **GASKET**
DICHTUNG
JOINT

(30) Priority: 09.09.2011 JP 2011196733
(43) Date of publication of application: 16.07.2014
(73) Proprietor: Uchiyama Manufacturing Corp., Okayama-shi Okayama 702-8004 (JP)
(72) Inventor: MORI, Dai, Akaiwa-shi Okayama 701-2221 (JP); SUMIDA, Tomokazu, Akaiwa-shi Okayama 701-2221 (JP); TSUMURA, Koichi, Akaiwa-shi Okayama 701-2221 (JP)
(74) Representative: Vossius & Partner Patentanwälte Rechtsanwälte mbB
(86) International application number: PCT/JP2012/069457
(87) International publication number: WO 2013/035460

(56) References cited:
- EP-A1- 2 341 268
- JP-A- H 109 395
- JP-A- 2008 261 351
- JP-A- 2010 249 270
- JP-U- S5 550 362

## Description

### Technical Field

The present invention relates to a gasket for sealing a space between a first member and a second member fastened by a fastening member so as to face each other, the gasket being fitted in an annular mounting groove formed on one of facing surfaces of the first and second members. For example, the present invention relates to a gasket for sealing a space between a cylinder head and an intake manifold or a space between a cylinder head and a head cover in an internal-combustion engine.

### Background Art

Patent Literatures 1 to 8 disclose examples of the above-mentioned gasket for sealing a space between the first member and the second member fastened by the fastening member so as to face each other, the gasket being fitted in an annular mounting groove formed on one of facing surfaces of the first and second members. The gasket disclosed in Patent Literatures 1 and 2 has a plurality of protrusions in the form of a longitudinal rib protruding on a side surface facing a side wall of the mounting groove and being formed at intervals in the circumferential direction so as to obtain stable attachment to the mounting groove. The gasket disclosed in Patent Literatures 3 to 5 has a protrusion in the form of a transverse rib on a side surface facing a side wall of the mounting groove along the entire circumference so as to obtain stable attachment (drop-out prevention ability and leaning prevention ability) to the mounting groove. The gasket in Patent Literatures 6 to 8 has a plurality of protrusions in the form of a longitudinal rib on a side surface in the circumferential direction at intervals and a protrusion in the form of a transverse rib crossing the protrusions in the form of a longitudinal rib along the entire circumference. The protrusions in the form of a longitudinal rib in Patent Literatures 6 to 8 have drop-out prevention function when the gasket is fitted in the mounting groove. Patent Literature 7 discloses a gasket according to the preamble of claim 1. The protrusion (bead) in the form of a transverse rib disclosed in Patent Literature 7 is provided for ensuring compression stability after the gasket is fitted in the mounting groove. The compression stability is deemed to leaning prevention function. The protrusions in the form of a transverse rib disclosed in Patent Literatures 6 to 8 are shown in the figures; however, reference numerals are not allotted and the function is not explained. PTL 9 discloses a gasket with variable protruded portions only on one side of the gasket.

### Citation List

### Patent Literature

PTL 1 :
   Japanese examined Utility Model Publication No.47-40192
PTL 2 :
   Japanese unexamined Utility Model Publication No.62-75262
PTL 3 :
   Japanese unexamined Utility Model Publication No.59-37464
PTL 4 :
   Japanese unexamined Patent Publication No.2008-281110
PTL 5 :
   Japanese unexamined Patent Publication No.2010-138957
PTL 6 :
   Japanese unexamined Patent Publication No.2008-249096
PTL 7 :
   Japanese unexamined Patent Publication No.2008-261351
PTL 8 :
   Japanese unexamined Patent Publication No.2010-249270
PTL 9 :
   European Patent Application EP 2 341 268 A1

### Summary of Invention

### Technical Problem

The protrusion in the form of a longitudinal rib of the gasket disclosed in Patent Literatures 1 and 2 is provided for keeping the posture (preventing leaning and misalignment) and for preventing drop-out when the gasket is fitted in the mounting groove. However, the protrusion is formed at intervals in the circumferential direction of the gasket, so that there is still a fear of leaning between the protrusions. It is difficult to seal a space between the side surface of the gasket and the facing side wall of the groove between the protrusions. Thus, a medium to be sealed may enter the space, reach a bottom of the mounting groove and deteriorate the gasket, thereby the sealing ability may be reduced over time. In addition, contact area to the side wall of the groove between the protrusions is small at the time of fitting the gasket in the mounting groove, so that the gasket may be fitted in the groove in a meandering manner. The protrusion in the form of a transverse rib of the gasket disclosed in Patent Literatures 3 and 4 is deemed to be provided for keeping the posture and for preventing drop-out when the gasket is fitted in the mounting groove. However, the protrusion in the form of a transverse rib is provided only in a row (annularly) on each side surface of the gasket, so that the protrusion does not fulfill enough leaning prevention function.

On the other hand, Patent Literature 5 discloses that protrusions in the form of a transverse rib are formed up and down in two rows on each side surface of the gasket. The two rows of protrusions in the form of a transverse rib formed up and down improve function of keeping posture and of preventing drop-out. However, tightness with the side wall of the groove increases and followability with the counterpart member (a member without the mounting groove) becomes worse, thereby deteriorating sealing ability. One of the first member and the second member is often a molded body made of synthetic resin in a sealing structure using such gaskets. When one of the members is a molded body of synthetic resin, the thermal expansion difference with the other member increases and the gap between the facing surfaces of two fastening members may change, namely become wide, because of the thermal expansion difference. When the gasket is provided too tightly to the side surface of the groove, the elastic restoration force of the gasket is reduced by the tight contact and the gasket hardly follows the facing surface of the other member accompanied with the above-mentioned change, enlargement of the gap, thereby deteriorating the sealing function between both sealing surfaces.

Patent Literatures 6 to 8 disclose the gasket having the protrusion in the form of a longitudinal rib and the protrusion in the form of a transverse rib. However, the protrusion in the form of a transverse rib is not explained in Patent Literatures 6 and 8 and the function is not clear. The protrusion (bead) in the form of a transverse rib disclosed in Patent Literature 7 seems to obtain compression stability after the gasket is fitted in the mounting groove, namely to obtain leaning prevention function. However, referring to the attached drawings, the protruding height of the protrusion in the form of a transverse rib on the side surface of the gasket is smaller than the protruding height of the protrusion in the form of a longitudinal rib. Therefore, tight contact between the protrusion in the form of a transverse rib and the side wall of the groove is not enough and there is a fear that the medium to be sealed may enter the bottom of the groove and deteriorate the gasket as mentioned above. The inadequate tight contact may be a cause of meandering of the gasket at the time of mounting the gasket in the groove.

The present invention is proposed in view of the above-mentioned problems and has an object to provide a novel gasket which surely achieves drop-out prevention and meandering prevention, does not allow a medium to be sealed to enter the mounting groove, and appropriately keeps sealing ability even when two members have thermal expansion difference.

### Solution to Problem

In the present invention, a gasket for sealing a space between a first member and a second member fastened by a fastening member so as to face each other, the gasket being fitted in an annular mounting groove formed on one of facing surfaces of the first member and the second member is characterized in that the gasket has an annular gasket body formed along the mounting groove; a plurality of longitudinal ribs, made up of protruding bodies, provided on a side surface of the gasket body facing a side wall of the mounting groove, the longitudinal rib protruding along height direction corresponding to depth direction of the mounting groove of the gasket body and protruding at intervals in circumferential direction of the gasket body; and a transverse rib provided on the side surface, the transverse rib being made up of a protruding body continuously protruding over the entire circumference of the gasket body. The protruding height of the transverse rib from the side surface is equal to or greater than protruding height of the longitudinal rib from the side surface and the transverse rib and the longitudinal rib are interconnected so as to cross each other.

The gasket of the present invention is fitted into the annular mounting groove formed on one of the facing surfaces of the first member and the second member facing each other. The first member and the second member are fastened by the fastening member. Thus, the gasket is compressed between the facing surface of the one member having the mounting groove and the facing surface of the other member, so that the first member and the second member are sealed. The side surface of the gasket body facing the side wall of the mounting groove is provided with a plurality of longitudinal ribs and a transverse rib. Therefore, the gasket is prevented from leaning or meandering in the mounting groove during the above-mentioned fastening procedure. Specifically, the longitudinal ribs protrude along the height direction of the gasket body and interfere with the side wall of the mounting groove, so that the gasket does not further lean even when the gasket is leaning slightly during fastening procedure. The longitudinal ribs protrude at intervals along the circumferential direction. The transverse rib is provided between the adjacent longitudinal ribs, so that the transverse rib interferes with the side wall of the mounting groove between the longitudinal ribs and the gasket is prevented from leaning and meandering along the circumferential direction of gasket.

In addition to one transverse rib, a plurality of longitudinal ribs connected so as to intersect with the transverse rib are also provided, so that the contact area of the side wall of the mounting groove and the entire gasket via the transverse rib and the longitudinal ribs is reduced compared with the structure in which the transverse ribs are provided in two steps up and down. Therefore, the stress produced by deformation of the mounting groove of the gasket in the side wall direction is reduced at the time of the above-mentioned compression. The deformation of the mounting groove in the side wall direction is inhibited by the side wall of the mounting groove, thereby inhibiting increase of the seal reaction force in the compressing direction produced by the above-mentioned deformation of the mounting groove in the compressing direction (fastening direction) and keeping appropriate seal reaction force. The force of the gasket pushing the side wall of the mounting groove is reduced, thereby inhibiting sticking of both ribs to the side wall of the mounting groove. For example, even when the above-mentioned difference is caused between the facing surfaces by the thermal expansion difference between the first member and the second member, the gasket is thus elastically restored and follows the difference, thereby achieving excellent sealing ability between the facing surfaces.

The protruding height of the transverse rib from the side surface is equal to or greater than the protruding height of the longitudinal rib from the side surface, so that the transverse rib tightly contacts the side wall of the mounting groove without being affected by the longitudinal rib in a compressed condition by the above-mentioned fastening. Thus, the above-mentioned meandering is surely prevented and the medium to be sealed is prevented from entering the bottom wall from the side wall of the mounting groove. When the medium to be sealed is prevented from entering the bottom wall of the mounting groove, a part of the gasket body on the bottom wall side is not deteriorated while being exposed to the medium to be sealed, thereby appropriately keeping the sealing ability. In addition, the longitudinal rib and the transverse rib cross each other and are connected, thereby surely inhibiting entering of the medium to be sealed into the bottom wall.

In the present invention, the transverse rib of the above-mentioned gasket can protrude at the center of the side surface in the height direction.
When the gasket is compressed from up and down, the middle portion of the gasket body in the height direction easily expands in the orthogonal direction, so that leaning of the gasket and intrusion of the medium to be sealed are effectively prevented by the interference of the middle portion of the gasket body and the side wall of the mounting groove. In addition, meandering of the gasket between the adjacent longitudinal ribs is effectively inhibited.

In the present invention, the sectional shape of the gasket body can be formed axisymmetric with respect to a transverse line at the center in the height direction and axisymmetric with respect to a longitudinal line at the center in width direction orthogonal to the height direction; and the longitudinal rib and the horizontal rib can be formed axisymmetric with respect to the longitudinal line on the side surfaces of both side portions of the gasket body. Thus, without limiting the fitting direction of the gasket to the mounting groove, the same effect as mentioned above is achieved even when the gasket is fitted upside-down. Therefore, fitting mistake of the gasket does not occur.

In the present invention, the sectional shape of the gasket body can be formed axisymmetric with respect to a transverse line at the center in the height direction and axisymmetric with respect to a longitudinal line at the center in width direction orthogonal to the height direction. The longitudinal rib and the horizontal rib can be formed axisymmetric with respect to the longitudinal line on the side surfaces of both side portions of the gasket body. Thus, compressive elastic deformation of the ribs is uniformly done at the above-mentioned fastening, thereby appropriately preventing entering of the medium to be sealed, meandering, and leaning, and appropriately achieving followability accompanied with the deformation.

### Advantageous Effects of Invention

The gasket of the present invention surely achieves drop-out prevention and meandering prevention, prevents the medium to be sealed from entering the mounting groove, and appropriately keeps the sealing ability even when two members have thermal expansion difference.

### Brief Description of Drawings

Fig.1 shows a sectional view of an essential part when the first member and the second member are fastened and the gasket of the present invention is used. It also shows a partially enlarged view.
Fig.2 is a partially broken perspective view diagrammatically showing one embodiment of the gasket of the present invention.
Fig.3 is a plan view showing a part of the gasket.
Fig.4 is a similar view to the enlarged view of Fig.1 showing a state before the first member and the second member are fastened. It also shows a partially enlarged view.
Fig. 5 is a fragmental sectional view along the line X-X in Fig.4.
Fig.6 is a similar view to Fig.4 and shows another embodiment of the gasket of the present invention.

### Description of Embodiments

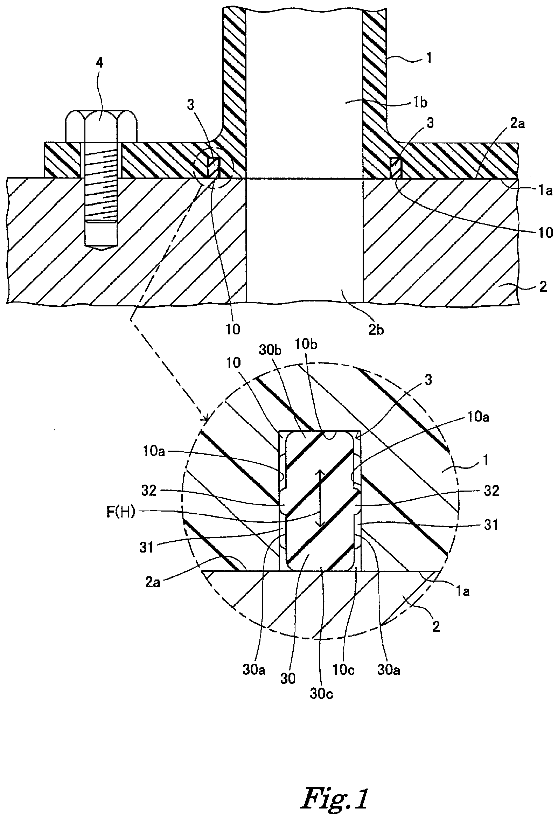

An embodiment of the present invention is explained based on the drawings. Fig.1 shows a sealing structure wherein a space between an intake manifold (first member) 1 and a cylinder head (second member) 2 is sealed via a gasket in an internal-combustion engine. The intake manifold 1 and the cylinder head 2 are arranged in such a manner that the surfaces 1a, 2a face each other. The intake manifold 1, a molded body of synthetic resin, has a space to be sealed 1b, a communication path of air-fuel mixture (medium to be sealed). The facing surface 1a of the intake manifold 1 is formed with a mounting groove 10 to be fitted with the gasket 3. The facing surface 1a is annularly formed around an opening of the space to be sealed 1b and the mounting groove 10 is annularly and concavely formed along the circumferential direction of the facing surface 1a. The sectional shape of the mounting groove 10 is formed rectangular in such a manner that the direction perpendicular to the facing surface 1a becomes a groove depth F. The cylinder head 2, a metal cast body such as aluminum, is formed with a space to be sealed 2b, a flow path of the air-fuel mixture from the intake manifold 1. The facing surface 2a is flat and formed around an opening of the space to be sealed 2b. The intake manifold 1 and the cylinder head 2 are fastened with a bolt (fastening member) 4 accompanied with compression of the gasket 3 in such a manner that the surfaces 1a, 2a are secured facing each other with the gasket fitted in the mounting groove 10.

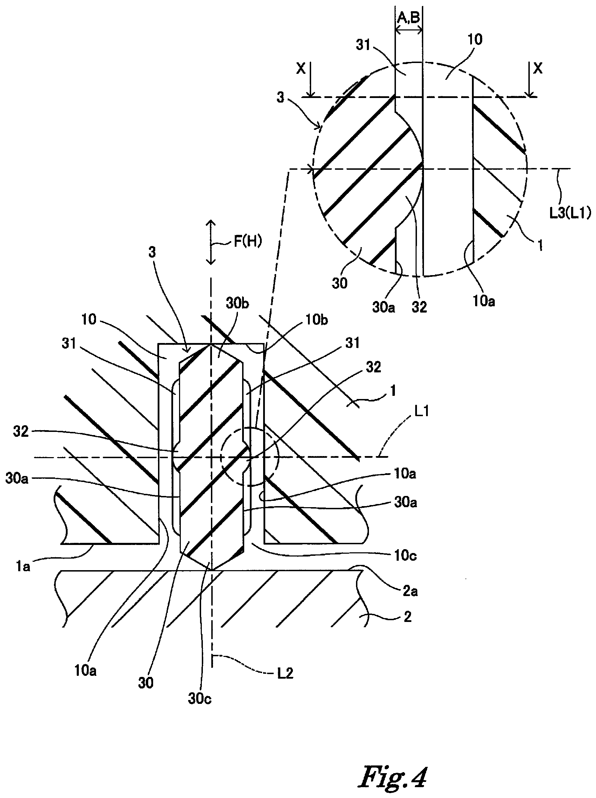

The gasket 3 is a vulcanization molded body of rubber such as FKM, NBR, H-NBR, EPDM, CR, ACM, AEM, VMQ, or FVMQ and is formed in the shape of a ring capable of fitting in the annular mounting groove 10. The gasket 3 includes an annular gasket body 30 along the mounting groove 10. The sectional shape of the gasket body 30 is vertically long along the height direction "H" corresponding to the depth direction "F" of the mounting groove 10 as shown in Fig.1 to Fig.4. The gasket body 30 is axisymmetrical with respect to a transverse line L1, axis of symmetry, at the center in the height direction and is also axisymmetrical with respect to a longitudinal line L2, axis of symmetry, at the center in the width direction perpendicular to the height direction "H", referring to Fig.4. Side surfaces 30a, 30a facing the side walls (inner walls) 10a, 10a of the mounting groove 10 of the gasket body 30 are parallel to the height direction "H". The sections of upper and lower ends 30b, 30c in the height direction of the gasket body 30 are triangular. The height of the gasket body 30 is larger than the depth of the mounting groove 10. As shown in Fig.4, when the upper end 30b is fitted in the mounting groove 10 so as to abut on a bottom wall 10b, a portion including the lower end 30c protrudes lower than an opening 10c of the mounting groove 10.

The terms "up" and "down" in the specification indicate up and down in the figures along the height direction "H". The sectional shapes of the upper end 30b and the lower end 30c are not limited to be triangular and can be flat, like an arc, or other shapes.

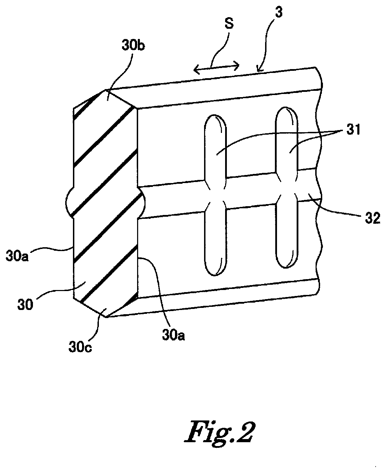

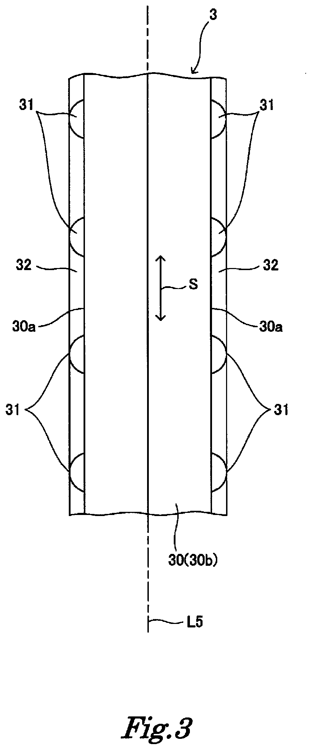

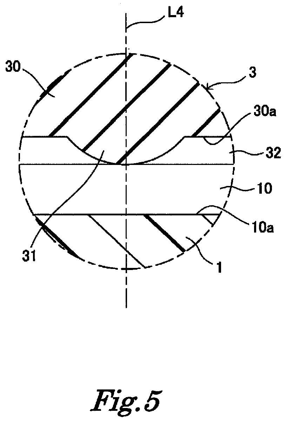

A plurality of longitudinal ribs 31, made up of protruding bodies, are formed on both side surfaces 30a, 30a of the gasket body 30 along the height direction "H" and with interval along the circumferential direction "S" of the gasket body 30, referring to Fig.2 and Fig.3. A transverse rib 32 is provided for side surfaces 30a, 30a, respectively, the transverse rib 32 being a protruding body around the entire gasket body 30 in the circumferential direction S. The longitudinal rib 31 and the transverse rib 32 have chevron-shaped sections and are formed axisymmetrical with respect to lines L3, L4 (normal lines) perpendicular to the side surface 30a of the gasket body 30, the lines L3, L4 passing through the top of the chevron shape, referring to Fig.4 and Fig.5. The longitudinal rib 31 and the transverse rib 32 are formed on the side surfaces 30a, 30a axisymmetrical with respect to the longitudinal line L2. The transverse rib 32 is formed in such a manner that the transverse line L1 becomes identical to the normal line L3 at the center of the height direction "H" of the side surfaces 30a, 30a. A plurality of longitudinal ribs 31 are formed on the side surfaces 30a, 30a axisymmetrical with respect to the center line L5, referring to Fig.3, along the circumferential direction (longitudinal direction) of the gasket body 30. In this embodiment, the protrusion height "A" from the side surface 30a of the transverse rib 32 is the same as that of the longitudinal rib 31, referring to Fig.4.

Here explained is a configuration of the sealing structure for sealing the space between the members 1, 2 with the gasket 3 provided between the facing surface 1a of the intake manifold 1 and the facing face 2a of the cylinder head 2. As shown in Fig.4, the above-mentioned gasket 3 is fitted in the mounting groove 10. The sectional shape of the gasket 3 is substantially formed axisymmetrical vertically and horizontally as mentioned above. Therefore, the fitting direction is not limited and the gasket can be fitted in the mounting groove 10 from the upper end 30b or from the lower end 30c without any fear of mounting mistake. The facing surfaces 1a, 2a are arranged so as to face each other with the gasket 3 fitted in the mounting groove 10, and the intake manifold 1 and the cylinder head 2 are fastened with a bolt as shown in Fig.1. Such fastening is executed in the depth direction "F" of the mounting groove 10, namely in the height direction "H" of the gasket 3. By the fastening, the gasket 3 is compressed along the height direction "H" between the bottom wall 10b (inner wall) of the mounting groove 10 and the facing surface 2a of the cylinder head 2. When the gasket 3 is compressed along the height direction "H", the upper and lower ends 30b, 30c of the gasket body 30 are compressed and elastically deformed, thereby elastically contacting with the bottom wall 10b and the facing surface 2a as shown in Fig.1. In addition, the gasket body 30 is elastically deformed so as to be enlarged in the direction (width direction) perpendicular to the height direction "H".

In the compression procedure, the gasket 3 tends to lean right or left. The longitudinal ribs 31 protrude on the side surfaces 30a, 30a of the gasket body 30 as mentioned above, so that either one of the longitudinal ribs 31 abuts on the side surface 30a, thereby preventing further leaning. The longitudinal ribs 31 of the side surfaces 30a, 30a are formed axisymmetrical with respect to the center line L5, referring to Fig.3, thereby effectively preventing leaning right or left by being regulated with the side walls 10a, 10a of the longitudinal ribs 31, 31. The transverse ribs 32, 32 protrude at the center of the side surfaces 30a, 30a in the height direction, respectively. The transverse rib 32 abuts on the side wall 10a between the adjacent longitudinal ribs 31 in the circumferential direction of the gasket body 30, thereby preventing leaning of the gasket 3 therearound. The transverse rib 32 is formed at the center which is remarkably enlarged in the width direction at the time of compression, so that the transverse rib 32 easily abuts on the side wall 10a, thereby accurately preventing leaning of the gasket 3 between the adjacent longitudinal ribs 31, 31. The gasket 3 sometimes meanders right and left in the mounting groove 10 in the compression procedure. When the transverse rib 32 abuts on the side wall 10a, such a meandering behavior is prevented. The protruding height from the side surface 30a of the transverse rib 32 is the same as that of the longitudinal rib 31 in this embodiment, so that the longitudinal rib 31 does not impede meandering prevention ability between the adjacent longitudinal ribs 31.

Fastening with the bolt 4 is executed in such a manner that the facing surfaces 1a, 2a abut on each other and are engaged together as shown in Fig.1. Therefore, the gasket 3 is uniformly compressed without causing compression difference around the entire perimeter along the circumferential direction "S". After fastening as mentioned above, the gasket 3 is compressed in the height direction "H", namely up and down, and is enlarged in the width direction (direction perpendicular to the height direction "H") as shown in Fig.1. Then, the upper and lower ends 30b, 30c of the gasket body 30 elastically deform and abut on the bottom wall 10b of the mounting groove 10 and the facing surface 2a of the cylinder block 2, respectively. In addition, the longitudinal rib 31 and the transverse rib 32 elastically deform and abut on the side wall 10a of the mounting groove 10. The space between the facing surface 1a of the intake manifold 1 and the facing surface 2a of the cylinder head 2 is sealed by elastic contact of the upper and lower ends 30b, 30c with the bottom wall 10b and the facing surface 2a, respectively, thereby preventing leakage of the above-mentioned medium flowing between the spaces to be sealed 1b, 2b. The transverse rib 32 is formed around the entire circumference of the gasket body 30 and tightly and elastically contacts the side wall 10a, thereby preventing intrusion of the medium to be sealed into the bottom wall 10b of the mounting groove 10 and preventing retention of the medium in the bottom wall 10b. Therefore, a portion of the gasket on the bottom wall 10b side is not deteriorated by exposure to the entered medium to be sealed, thereby preventing deterioration of sealing ability over time. In this embodiment, the protruding height "A" from the side surface 30a of the transverse rib 32 and the protruding height "B" from the side surface 30a of the longitudinal rib 31 are the same, so that the transverse rib 32 surely and tightly contacts the side wall 10a of the transverse rib 32. In addition, the transverse rib 32 intersects with the longitudinal rib 31 in a connected manner, thereby accurately preventing intrusion of the medium to be sealed into the bottom wall 10b.

The internal-combustion engine including the intake manifold 1 is used under high-temperature circumstance, so that the intake manifold 1, made of a molded body made of synthetic resin easily thermally deforms (thermal expansion). The difference of the thermal expansion caused by thermal deformation between the intake manifold 1 and the cylinder head 2 causes the intake manifold 1 to float in a space between the fastening members with the bolt 4, thereby a space between the facing surfaces 1a, 2a is to be enlarged. The gasket 3 elastically contacts the side wall 10a of the mounting groove 10 by elastic deformation of a plurality of longitudinal ribs 31 and each transverse rib 32 to both side walls 10a, thereby substantial elastic contact area becomes small. Therefore, at the time of above-mentioned compression, stress caused by deformation of the gasket 3 in a direction of the side wall 10a of the mounting groove 10 becomes small. In addition, the deformation of the mounting groove 10 in a direction of the side wall 10a is inhibited by the side wall 10a of the mounting groove 10, thereby inhibiting increase of seal reaction force in a compression direction caused by the deformation into compression direction (a fastening direction) and keeping appropriate seal reaction force. The force of the gasket 3 pushing the side wall 10a of the mounting groove 10 is reduced, thereby inhibiting sticking of both ribs 31, 32 to the side wall 10a. The side wall 10a scarcely regulates the restoration elasticity along the depth direction "F" of the gasket 3 caused by compression, the restoration elasticity works on the lower end 30c accompanied with broadening of the space between the facing surfaces 1a, 2a, and the lower end 30c is elastically deformed so as to expand to the facing surface 2a. Even when the space between the facing surfaces 1a, 2a becomes wide, the gasket 3 follows such change by the restoration elasticity with the elastic contact condition of the lower end 30c to the facing surface 2a kept. In addition, even when the intake manifold 1 thermally deforms, the sealing ability with the cylinder head 2 is not deteriorated, thereby keeping superior sealing ability.

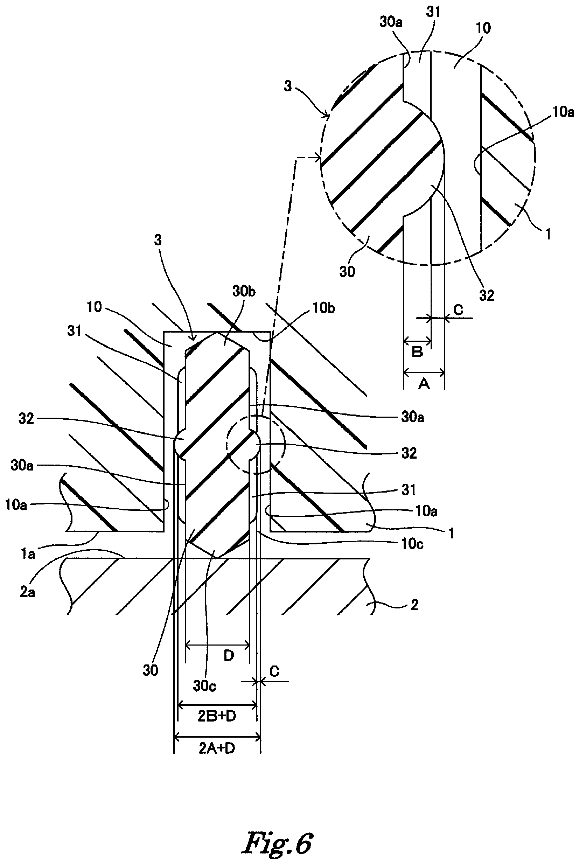

The longitudinal rib 31 and the transverse rib 32 have chevron-shaped sections and are formed axisymmetrical with respect to the normal lines L3, L4, axis of symmetry, so that the ribs 31, 32 are compressed and elastically deformed in a uniform manner at the time of the above-mentioned fastening. In addition, entering of the medium to be sealed, meandering, and leaning are appropriately prevented, and followability accompanied with the change is appropriately achieved.
As shown in Fig.1, the gasket 3 is fitted in the mounting groove 10 of the intake manifold 1 with the opening 10c of the mounting groove 10 facing upward. Then, the intake manifold 1 is reversed upside down or rotated and is arranged in such a manner that the facing surface 1a of the intake manifold 1 and the opening 10c of the mounting groove 10 face the facing surface 2a of the cylinder head 2. The gasket 3 in the figures is fitted in the mounting groove 10 in an idle manner, so that the gasket 3 may fall down without being held with a hand. A drop-out prevention protrusion elastically contacting the side wall 10a of the mounting groove 10 during fitting can be provided for the longitudinal rib 31, the transverse rib 32, or the intersecting portions of the ribs 31, 32, the drop-out prevention protrusion being omitted in the figure. Such a drop-out prevention protrusion is applicable in the following embodiment shown in Fig.6.

Fig.6 shows another embodiment of the gasket of the present invention. In this embodiment, the protruding height "A" from the side surface 30a of the transverse rib 32 of the gasket 3 is larger than the height "B" from the side surface 30a of the longitudinal rib 31. Other configurations of the gasket 3 are the same as those of the embodiments shown in Fig.1 to Fig.5. In this embodiment, the gasket 3 is formed such that the protruding height "A" of the transverse rib 32 is larger than the height "B" of the longitudinal rib 31, thereby the transverse rib 32 abuts on the side wall 10a more tightly than the longitudinal rib 31 abutting on the side wall 10a at the time of fastening. Therefore, meandering is further effectively prevented by the transverse rib 32. In addition, the medium to be sealed is surely prevented from entering the inside on the bottom wall 10b side of the mounting groove 10 after the fastening. In such a case, when the difference "C" between the protrusion height "A" and the protrusion height "B" is too large, the distance between the top of the longitudinal rib 31 and the side wall 10a of the mounting groove 10 becomes large, so that leaning prevention ability by the longitudinal rib 31 is not adequately accomplished at the time of compression caused by the fastening. As a result of several tests to obtain an appropriate value of the difference "C" between the protrusion height "A" and the protrusion height "B", it was found that the difference "C" was preferably equal to or smaller than 20 percent of 2B + D. In this formula, "D" indicates dimension in the width direction of the gasket body 30 and 2B indicates length of the line connecting the tops of the longitudinal ribs 31, 31 formed on the side surfaces 30a, 30a of the gasket body 30. Namely, it is desirable that C equals to or is less than 0.2*(2B+D) and 2A+D equals to or is less than 1.4*(2B+D), 2A being the length of the line connecting the tops of the transverse ribs 32, 32.

In the above-mentioned embodiments, the first member and the second member are an intake manifold and a cylinder head. However, the sealing structure to which the present invention is applied is not limited to such embodiments and the present invention is applicable to a sealing structure between the head cover and the cylinder head and a sealing structure between two members. In the above-mentioned embodiments, the intake manifold, i.e., the first member, is exemplified as a molded body of synthetic resin. However, both of the first member and the second member can be made of metal or synthetic resin. The transverse rib 32 is preferably positioned at the center of the side surface 30a in the height direction H as shown in the figures; however, it can be positioned slightly lower. In addition, the sectional shapes of the mounting groove 10, the gasket body 30, the longitudinal rib 31 and the transverse rib 32 in the figures are diagrammatically shown. It goes without saying that the shapes are appropriately determined according to the design. The sectional shape of the gasket 3 is desirably axisymmetrical vertically and horizontally like the above-mentioned embodiments; however, the present invention is not limited to such embodiments and the gasket 3 can be provided at the lower portion with a flange expanding to right and left. In such a case, the facing surfaces 1a, 2a do not abut on each other when the first member and the second members are fastened, and the flange is pressed between the facing surfaces 1a, 2a, thereby generating a gap between the facing surfaces 1a, 2a

### Reference Signs List

- 1: intake manifold (the first member)
- 1a: facing surface
- 10: mounting groove
- 10a: side wall
- 10b: bottom wall
- 2: cylinder head (the second member)
- 2a: facing surface
- 3: gasket
- 30: gasket body
- 30a: side surface
- 31: longitudinal rib
- 32: transverse rib
- 4: bolt (fastening member)
- A: protruding height of the transverse rib
- B: protruding height of the longitudinal rib
- F: depth direction
- H: height direction
- L1: transverse line at the center in the height direction (axis of symmetry)
- L2: longitudinal line at the center in the width direction (axis of symmetry)
- L3: axis of symmetry of the transverse rib (normal line)
- L4: axis of symmetry of the longitudinal rib (normal line)
- S: circumferential direction

## Claims

1. A gasket (3) for sealing a space between a first member (1) and a second member (2) fastened by a fastening member (4) so as to face each other, said gasket being adapted to be fitted in an annular mounting groove (10) formed on one of facing surfaces (1a) of said first member and said second member, said gasket comprising:
an annular gasket body (30) for fitting in said mounting groove;
a plurality of longitudinal ribs (31), made up of protruding bodies, provided on a side surface (30a) of said gasket body for facing a side wall of said mounting groove, said longitudinal rib protruding along height direction (H) corresponding to depth direction (F) of said mounting groove of said gasket body and protruding at intervals in circumferential direction of said gasket body; and
a transverse rib (32) provided on said side surface (30a), said transverse rib being made up of a protruding body continuously protruding over the entire circumference of said gasket body; wherein said transverse rib (32) and said longitudinal rib (31) are interconnected so as to cross each other,
**characterised in that** the protruding height (A) of said transverse rib (32) from said side surface (30a) is equal to or greater than the protruding height (B) of said longitudinal rib (31) from said side surface (30a).

2. The gasket (3) as set forth in claim 1, wherein said transverse rib (32) protrudes at the center of said side surface in the height direction.

3. The gasket (3) as set forth in claim 1 or 2, wherein:
a sectional shape of said gasket body (30) is formed axisymmetric with respect to a transverse line at the center in the height direction (L1) and axisymmetric with respect to a longitudinal line at the center in width direction orthogonal to the height direction; and
said longitudinal rib (31) and said transverse rib (32) are formed axisymmetric with respect to said longitudinal line on said side surfaces (30a) of both side portions of said gasket body.

4. The gasket (3) as set forth in any one of claims 1 to 3, wherein sectional shapes of said transverse rib (32) and said longitudinal rib (31) are in the form of chevron and are formed axisymmetric with respect to a line passing through a top of the chevron shape and perpendicular to said side surface of said gasket body (30).

## Patentansprüche

1. Dichtung (3) zum Abdichten eines Raums zwischen einem ersten Element (1) und einem zweiten Element (2), die durch ein Befestigungselement (4) so befestigt sind, dass sie einander gegenüberliegen, wobei die Dichtung eingerichtet ist, in eine ringförmige Montagenut (10) eingepasst zu werden, die an einer von gegenüberliegenden Oberflächen (1a) des ersten Elements und des zweiten Elements ausgebildet ist, wobei die Dichtung aufweist:
einen ringförmigen Dichtungskörper (30) zum Einpassen in die Montagenut;
mehrere Längsrippen (31), die aus vorstehenden Körpern bestehen, die an einer Seitenfläche (30a) des Dichtungskörpers so vorgesehen sind, dass sie einer Seitenwand der Montagenut gegenüberliegen, wobei die Längsrippe längs einer Höhenrichtung (H) vorsteht, die einer Tiefenrichtung (F) der Montagenut des Dichtungskörpers entspricht, und in Intervallen in die Umfangsrichtung des Dichtungskörpers vorsteht; und
eine Querrippe (32), die an der Seitenfläche (30a) vorgesehen ist, wobei die Querrippe aus einem vorstehenden Körper besteht, der ununterbrochen über den gesamten Umfang des Dichtungskörpers vorsteht;
wobei die Querrippe (32) und die Längsrippe (31) miteinander verbunden sind, so dass sie sich gegenseitig kreuzen,
**dadurch gekennzeichnet, dass** die vorstehende Höhe (A) der Querrippe (32) von der Seitenfläche (30a) gleich oder größer als die vorstehende Höhe (B) der Längsrippe (31) von der Seitenfläche (30a) ist.

2. Dichtung (3) nach Anspruch 1, wobei die Querrippe (32) in der Mitte der Seitenfläche in die Höhenrichtung vorsteht.

3. Dichtung (3) nach Anspruch 1 oder 2, wobei:
eine Querschnittsform des Dichtungskörpers (30) bezüglich einer Querlinie in der Mitte in die Höhenrichtung (L1) axialsymmetrisch und bezüglich einer Längslinie in der Mitte in die zur Höhenrichtung orthogonalen Breitenrichtung axialsymmetrisch ausgebildet ist; und
die Längsrippe (31) und die Querrippe (32) bezüglich der Längslinie an den Seitenflächen (30a) von beiden Seitenabschnitten des Dichtungskörpers axialsymmetrisch ausgebildet sind.

4. Dichtung (3) nach einem der Ansprüche 1 bis 3, wobei Querschnittsformen der Querrippe (32) und der Längsrippe (31) in der Form eine Winkels vorliegen und bezüglich einer Line axialsymmetrisch ausgebildet sind, die durch eine Oberseite der Winkelform geht und senkrecht zur Seitenfläche des Dichtungskörpers (30) verläuft.

## Revendications

1. Joint (3) pour sceller un espace entre un premier élément (1) et un deuxième élément (2) fixés par un élément de fixation (4) de manière à être opposés l'un à l'autre, ledit joint étant prévu pour être ajusté dans une rainure de montage annulaire (10) formée sur une des surfaces opposées (1a) du premier élément et du deuxième élément, ledit joint comprenant :
un corps de joint annulaire (30) destiné à être ajusté dans la rainure de montage ;
une pluralité de nervures longitudinales (31), constituées de corps en saillie, prévues sur une surface latérale (30a) du corps de joint pour faire face à une paroi latérale de la rainure de montage, la nervure longitudinales faisant saillie dans le sens de la hauteur (H) correspondant au sens de la profondeur (F) de la rainure de montage du corps de joint et faisant saillie à intervalles dans la direction circonférentielle du corps de joint ; et
une nervure transversale (32) prévue sur la surface latérale (30a), ladite nervure transversale étant constituée d'un corps en saillie continue sur toute la circonférence du corps de joint ; la nervure transversale (32) et la nervure longitudinale (31) étant raccordées de manière à se croiser,
**caractérisé en ce que** la hauteur en saillie (A) de la nervure transversale (32) depuis la surface latérale (30a) est égale ou supérieure à la hauteur en saillie (B) de la nervure longitudinale (31) depuis la surface latérale (30a).

2. Joint (3) selon la revendication 1, où la nervure transversale (32) fait saillie au centre de la surface latérale dans le sens de la hauteur.

3. Joint (3) selon la revendication 1 ou la revendication 2, où :
la forme de section du corps de joint (30) est axisymétrique par rapport à une ligne transversale au centre dans le sens de la hauteur (L1) et axisymétrique par rapport à une ligne longitudinale au centre dans le sens de la largeur orthogonalement au sens de la hauteur ; et où
la nervure longitudinale (31) et la nervure transversale (32) sont axisymétriques par rapport à la ligne longitudinale sur les surfaces latérales (30a) des deux parties latérales du corps de joint.

4. Joint (3) selon l'une des revendications 1 à 3, où les sections de la nervure transversale (32) et de la nervure longitudinale (31) sont en forme de chevron et sont asymétriques par rapport à une ligne passant par le sommet du chevron et perpendiculaire à la surface latérale du corps de joint (30).
